# EUROPEAN PATENT SPECIFICATION

(11) **EP 3 332 163 B1**
(45) Date of publication and mention of the grant of the patent: **01.04.2020**
(21) Application number: 16757062.1
(22) Date of filing: 01.07.2016
(51) Int. Cl.: F16L 37/12

(54) **QUICK COUPLING**
SCHNELLKOPPLUNG
RACCORD RAPIDE

(30) Priority: 07.08.2015 IT UB20152982
(43) Date of publication of application: 13.06.2018
(73) Proprietor: Polo S.R.L., 23841 Annone di Brianza (LC) (IT)
(72) Inventor: POZZI, Marco, 23900 Lecco (IT); LOCATELLI, Silvia, 23900 Lecco (IT)
(74) Representative: Brasca, Marco
(86) International application number: PCT/IB2016/053963
(87) International publication number: WO 2017/025824

(56) References cited:
- EP-A1- 1 980 782
- EP-A1- 2 320 117
- WO-A1-99/27291
- FR-A5- 2 036 280
- US-A1- 2012 037 247

## Description

### Technical field of the invention

The object of the present invention is a quick coupling. In particular, the object of the present invention is a device for quick connection of a conduit of a circuit crossed by a fluid to a threaded or profiled male terminal. The invention relates to the field of quick couplings able to quickly and securely realise the connecting and disconnecting operations of two different conduits crossed by fluids, while obviating the onerous operations of manual locking that require the use of keys or other tools and ensuring the mechanical seal and the hermetic seal. The use of these quick couplings becomes necessary, for example but not exclusively, when functional tests are carried out on products requiring connection to pneumatic/oil-dynamic/hydraulic circuits (for example: boilers, radiators, engines, pumps, hydraulic/pneumatic cylinders, valves etc.). In particular, the device of the present invention may be used in many varied fields, in which pressure and flow rate of use can vary from negative values (presence of vacuum) to very high values.

### Prior Art

Quick couplings are known that are manually activatable in a push-pull mode, in which the connection step is done by gripping an external ring nut of the coupling and pushing the coupling against the terminal to be coupled with until the coupling is hooked and mechanically retained, and the disconnecting step is done once more by acting on said external ring nut.

For example, the prior art document EP 1876381 describes a quick coupling for threaded terminals. An end of this coupling destined to receive the terminal is provided with an annular connection body made up of a plurality of annular segments elastically joined to one another by means of an elastic ring and having, internally or externally according to the type of terminal to be connected, a threading or profiling configured for carrying out the connection to the terminal. Prior-art document WO 2013/175351 illustrates a quick coupling for threaded or profiled terminals which comprises: a central body extending between an upper end sealingly connectable to a terminal and a lower end connectable to a circuit; a hooking clamp associated to the central body and operable at least between a first configuration, in which it is not hooked to the terminal and enables insertion and de-insertion of the central body into and from the terminal, and a second configuration, in which it is hooked to the terminal and connects the central body thereto; activating means movably active on the central body and on the hooking clamp for enabling passage of the hooking clamp between the first and the second configuration and, consequently, the coupling and decoupling of the central body to and from the terminal. Prior-art document EP2320117 illustrates a quick coupling with an annular connection body made up by a plurality of annular segments elastically joined to one another by means of an elastic ring, in a similar way to EP 1876381. Prior-art document WO 99/27291 illustrates a connector for high-pressure lines provided, in an embodiment thereof, with spheres able to block the terminal in the connector.

The Applicant has observed that known quick couplings, such as the ones described in the foregoing, can be improved in various aspects, in particular with reference to the mechanical elements of the couplings that enter into direct contact with the terminals and with reference to the activating systems of said mechanical elements.

The Applicant has in fact, for example, noted that the annular sectors known from document EP 1876381, as they are moved by means of a simple elastic ring, do not guarantee a precise coupling with the terminal and can be subject to a deterioration in performance over time.

The Applicant has further observed that the hooking clamp of the type illustrated in WO 2013/175351 must necessarily have sufficiently long arms in order to provide the necessary radial opening/closing of the ends thereof and that this not only does not guarantee a secure and precise coupling, neither does it have the capacity to reduce the longitudinal dimensions of the coupling.

Document EP 1 980 782 discloses a quick connector including a female connection element. The female element has an axial channel intended to accommodate an end piece. The female element has an annular element and at least one locking ball for locking the end piece that can move axially relative to the annular element and radially between an unlocked position and a locked position in which it is capable of axially blocking the end piece.

### Objective of the invention

In this context, the Applicant has set the objective of proposing a quick coupling that is qualitatively superior and able to guarantee better performance, and is possibly more economical and also more compact than those of the prior art.

The Applicant has in particular concentrated its aim on disclosing a quick coupling that ensures a mechanical hooking (with the respective threaded or profiled terminal) that is more precise, stabler and more secure than the known terminals and thus also guarantees a secure seal even in the presence of high-pressure fluids.

The Applicant also aims at disclosing a quick coupling that is of small dimensions and is in particular axially compact.

The Applicant also aims at disclosing a quick coupling that is simple to realise, assemble and deassemble.

### Summary of the invention

The Applicant has found that these objectives and aims can be attained by a quick coupling according to the present invention, of the type claimed in the appended claims and/or described in the following aspects.

According to an aspect, the present invention relates to a quick coupling for threaded or profiled terminals, comprising the features of claim 1.

The number of pins can advantageously be varied from a single pin to a plurality of pins according to the working pressure that the quick coupling must support. In this way, the number of pins is limited for use at low pressures and consequently the quick couplings for use at lower pressure are particularly economical.

The threaded or profiled radially internal ends of the pins are particularly advantageous as they enable, in the second position of the jaw, a solid engagement to the external surface of the external surface of the threaded or profiled terminal. The solid engagement of the ends of the pins to the threaded or profiled terminal ensures a reliable functioning of the quick coupling.

In an aspect, the threading or profiling is defined by a threaded or profiled surface located at the radially internal end of said at least a pin.

In an aspect, the pin has a substantially cylindrical conformation having a substantially constant diameter between the threaded or profiled radially internal end and a radially external end, preferably convex, opposite the profiled or threaded radially internal end, the threading or profiling preferably extending for a width that is substantially equal to said diameter.

In an aspect, the threading or profiling does not project beyond the substantially cylindrical conformation of the pin.

The pins having a cylindrical conformation are particularly compact and have modest dimensions.

In an aspect, the auxiliary body is externally engaged to the main body and has a thrust surface configured for operating on the pins, the auxiliary body being configured for operating between an axially advanced position in which it constrains the pins in the second hooked position to the terminal and an axially retracted position, in which it releases the pins.

In an aspect, the thrust surface is substantially truncoconical.

In an aspect, the pins have a convex radially external end opposite the profiled or threaded radially internal end.

In the invention, the hooking/unhooking devices comprise a plurality of spheres configured for operating between a first configuration in which they block the relative axial movement between the auxiliary body and the main body and a second configuration in which they enable the relative axial movement between the auxiliary body and the main body, the spheres being housed internally of housing seats fashioned in the main body and being configured for radially sliding internally of said housing seats in order to pass between said two configurations.

The use of spheres is particularly advantageous as it enables an easy blocking/unblocking of the relative axial movement between the auxiliary body and the main body. Further, the blocked configuration between the auxiliary body and the main body does not vary with small rotational displacements of the spheres in the seat thereof.

Further, the passage between the blocked and unblocked configurations of the relative axial movement between the auxiliary body and the main body occurs in a simple and easy way by means of the radial sliding of the spheres internally of the housing seats.

Further, because of the compact shape thereof, the spheres are not much subject to accidental breakage and therefore the performance over time of the quick coupling is particularly reliable.

In an aspect, in the first configuration the spheres do not project beyond a radial internal portion of the housing seat and are engaged to the auxiliary body.

In an aspect, in the second configuration the spheres project beyond a radial internal portion of the housing seat and are deconstrained from the auxiliary body. In an aspect, the hooking/unhooking devices have a plurality of housing portions defined on the auxiliary body, in the axially retracted position of the auxiliary body, each housing portion being configured for at least partly housing a respective sphere so as to prevent the axial sliding of the auxiliary body.

In an aspect, the hooking/unhooking devices comprise a cursor, the cursor being operatively active on the spheres and being configured for axially sliding between a first position in which it constrains the spheres internally of the housing portions and prevents axial sliding of the auxiliary body and a second position in which it does not constrain the spheres in the housing portions and enables the axial sliding of the auxiliary body.

In an aspect, the cursor operates in contact with the spheres in both the first position and in the second position.

In an aspect, the cursor has a transversal section having a saddle conformation having a top that is substantially flat and an abutment portion developing without solution of continuity with the top, the spheres, in the first position of the cursor, being partly housed in the housing portions and being interposed between said housing portions and said top in such a way as to constrain the axial sliding of the auxiliary body, the spheres, in the second position of the cursor, being interposed between the abutment portion and an internal surface of the auxiliary body that is substantially flat so as to enable the axial sliding of the auxiliary body.

In an aspect, the pins comprise a step configured for blocking the radial sliding of the pins internally of the respective radial seats.

In an aspect, the step of the pins has an arc of circumference extension.

In an aspect, the quick coupling further comprises an abutment element provided with a terminal end projecting frontally with respect to the radial seat, said terminal end being configured so as to enter into abutment with the step for determining the blocking of the radial sliding of the pins.

In an aspect, the terminal end of the abutment element substantially functions as a limit-stop able to enter into abutment with the step of the pin for limiting the radial sliding of the pins internally of the respective radial seats.

In an aspect, the pins are housed internally of the radial seats in such a way as not to be able to rotate so as to guarantee a reliable reciprocal positioning between the projecting terminal end of the abutment element and the step of the pins.

In particular, the impossibility of rotating the pins internally of the radial seats enables correctly maintaining the position of the inclination of the helix of the threading or the profiling of the pins in order to enable a correct engagement to the terminal.

In an aspect, the quick coupling comprises an obturator configured for axially sliding between an axially advanced position and an axially retracted position, the obturator, in the axially advanced position, preventing the disengagement of the spheres from the housing portions so as to maintain the auxiliary body in the axially retracted position, the obturator, in the axially retracted position, determining the disengagement of the spheres from the housing portions of the auxiliary body in such a way as to enable passage of the auxiliary body from the axially retracted position to the axially advanced position.

In an aspect, the cursor is engaged about and is concentric to the obturator, with the axial sliding of the obturator determining the axial sliding of the cursor.

In an aspect, the obturator comprises limit-stop means configured for limiting the axial sliding of the cursor.

In an aspect, the limit-stop means comprise an elastic ring and/or a wall transversal to the main extension axis of the conduit, in particular wherein the elastic ring and the wall are arranged on an opposite side with respect to the cursor.

In an aspect, the quick coupling comprises an elastic element, such as a spring, operatively active on the auxiliary body to push the auxiliary body towards the first end of the main body.

In an aspect, the pins are arranged angularly staggered positions about the main extension axis of the conduit.

The angularly staggered arrangement of the pins about the main extension axis of the conduit enables the pins to close, in particular symmetrically, about the terminal in the second position of the jaw. The symmetrical closing of the pins on the terminal further determines an equal distribution of the locking force on the external surface of the terminal.

In an aspect, the spheres are arranged angularly staggered positions about the main extension axis of the conduit.

In an aspect, the spheres are arranged between the cursor and the auxiliary body. In an aspect, the quick coupling comprises a first spring operating between the auxiliary body and a first portion of the main body so as to push the auxiliary body towards the first end of the main body.

In an aspect, the main body comprises a first portion and a second portion, the first end of the main body being defined at the first portion and the second end of the main body being defined at the second portion.

In an aspect, the first and second portions of the main body are engaged by means of a threaded coupling.

In an aspect, the quick coupling comprises a second spring operating between a first portion of the main body and the obturator in such a way as to push the obturator towards the first end of the main body.

In an aspect, the quick coupling comprises a third spring operating between the cursor and a first portion of the main body so as to push the cursor towards the first end of the main body.

In an aspect, in the first position of the jaw the pins are completely housed internally of the radial seats.

In an aspect, in the second position of the jaw the pins act in contact on the terminal, constraining it to the quick coupling.

In an aspect, the pins are configured for radially translating internally of the radial seats of the main body.

In an aspect, the cursor is configured so as to translate axially with respect to the auxiliary body and with respect to the main body.

In an aspect, the obturator is configured so as to translate axially with respect to the auxiliary body and with respect to the main body.

In an aspect, the cursor and the obturator operate in a combined way on the spheres to determine the radial positioning thereof internally of the housing seats; the cursor, in the axially advanced position of the obturator, determining the positioning of the spheres at least partly internally of the housing portions of the auxiliary body so as to constrain the auxiliary body in the axially retracted position; the cursor, in the axially retracted position of the obturator, determining the disengagement of the spheres from the housing portions of the auxiliary body so as to enable the passage of the auxiliary body from the axially retracted position to the axially advanced position.

Realising a quick coupling according to the invention can comprise the following steps:
- predisposing a main body having radial seats,
- realising at least a pin, in particular a plurality of pins,
- fashioning a threaded or profiled surface located at an end of said at least a pin,
- fashioning a step on said at least a pin, the step being configured for blocking the radial sliding of the pin internally of the respective radial seat,
- predisposing a jaw comprising at least a pin, in particular a plurality of pins,
- engaging said at least a pin at the respective radial seat,
- engaging at least an activating device to the main body, the activating device comprising an auxiliary body configured for operating on said at least a pin.

In an aspect, the step of fashioning a step on said at least a pin is realised by removing material from the pin, for example by milling.

In an aspect, the method comprises the step of housing spheres internally of housing seats fashioned in the main body, the spheres being operatively active on the auxiliary body for regulating the axial position thereof.

In an aspect, engaging an activating device to the main body comprises engaging an auxiliary body about the main body.

### Brief description of the drawings

Further characteristics and advantages will more fully emerge from the detailed description of a preferred but not exclusive embodiment of a quick coupling according to the present invention.

This description will be explained below with reference to the attached drawings, provided solely for indicative and therefore non-limiting purpose, in which:
- figure 1 illustrates a quick coupling according to the present invention in a first configuration in which the terminal is not engaged to the coupling;
- figure 1a illustrates a front view of some elements of the quick coupling in the first configuration;
- figure 2 illustrates a quick coupling according to the present invention in a second configuration in which the terminal is solidly engaged to the quick coupling;
- figure 2a illustrates a front view of some elements of the quick coupling in the second configuration;
- figure 3 is a frontal view of a pin of the quick coupling according to the present invention;
- figure 4 is a view from below of the pin of figure 3;
- figure 5 is a lateral view of the pin of figure 3;
- figure 6 is a section view of the pin of figure 4.

### Detailed description of a preferred embodiment of the invention

With reference to the accompanying figures, 1 indicates overall a quick coupling for threaded or profiled terminals. The accompanying figures illustrate a female quick coupling configured for being engaged to a male threaded terminal 2. The quick coupling 1 comprises a main body 3 that is tubular and extends along a main extension axis X-X and defines internally thereof a conduit 4 enabling an advancement of fluid internally of the quick coupling 1. The main body 3 comprises a first and a second portion 5, 6. The first and the second portion 5, 6 can be removably engaged to one another for example by means of a threaded coupling. The main body 3 comprises a first and a second end 7, 8 respectively defined at the first and second portion 5, 6. The first end 7 of the main body 3 is configured for being removably coupled to the terminal 2 and the second end 8 is configured for being removably coupled to a circuit, for example by means of a threaded coupling.

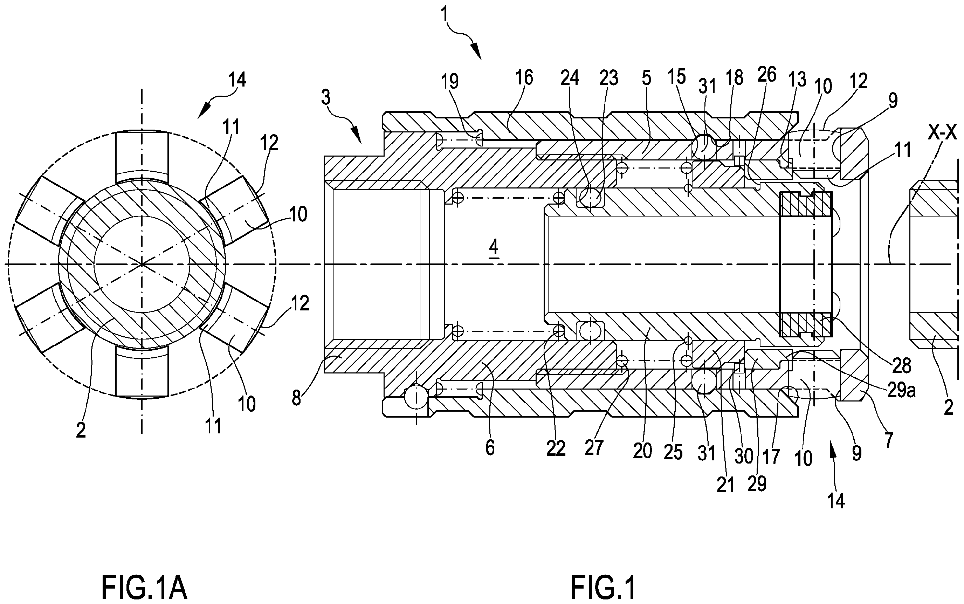

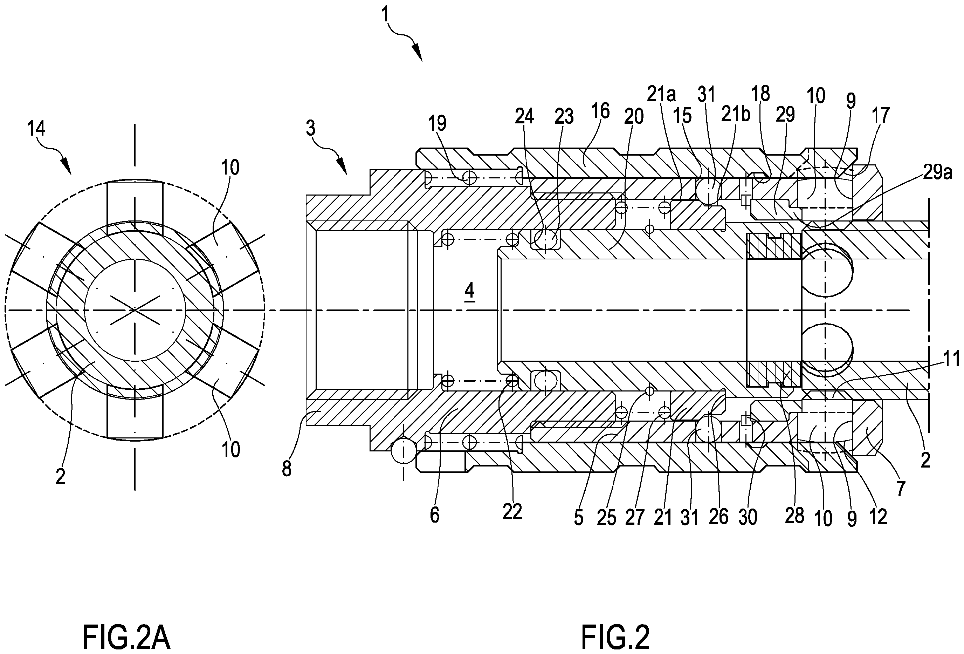

The first portion 5 of the main body 3 comprises a plurality of radial through-seats 9. The radial seats 9 are defined in proximity of the first end 7 of the main body 3 and open onto the conduit 4. The radial seats 9 are angularly staggered about the main extension axis X-X. The radial seats 9 are preferably six in number and are staggered by a same angular amplitude. Each radial seat 9 is configured and dimensioned for housing a respective pin 10. In the following an embodiment will be described which includes a plurality of pins 10; however even only one pin 10 could be provided. The pins 10 are housed internally of the radial seats 9 in such a way as to slide radially internally thereof. The pins 10 are angularly staggered about the main extension axis X-X. The pins 10 are preferably six in number and are staggered by a same angular amplitude (see figures 1a and 2a). According to the embodiment illustrated in the accompanying figures, the pins 10 are housed internally of the radial seats 9 in such a way as not to be able to rotate. Each pin 10 is provided with opposite ends 11, 12 and in particular has a threaded radially internal end 11 and a convex radially external end 12. In the embodiment in which the quick coupling 1 is configured for being engaged to profiled terminals 2, the radially internal end 11 of each pin 10 is appropriately profiled so as to be stably engageable to the terminal 2. For example, the radially internal end 11 of each pin 10 can be at least partly complementarily-profiled with respect to an external surface of the terminal 2.

In the embodiment in which the quick coupling 1 is configured for being engaged to threaded terminals 2, the radially internal end 11 of each pin 10 is appropriately threaded so as to be stably engageable to the terminal 2.

The constraint in rotation of the pins 10 internally of the radial seats 9 enables the threading or profiling of the pins 10 to be orientated appropriately for enabling a ready and easy engagement of the pins 10 to the threaded or profiled terminal 2. The threaded or profiled radially internal end 11 extends over a width that is substantially equal to a width or diameter of the pins 10. As illustrated in the appended figures, the pins 10 have a substantially cylindrical conformation and the threading or profiling is defined at a base of the pins 10 and does not project beyond the cylindrical conformation of the pins 10.

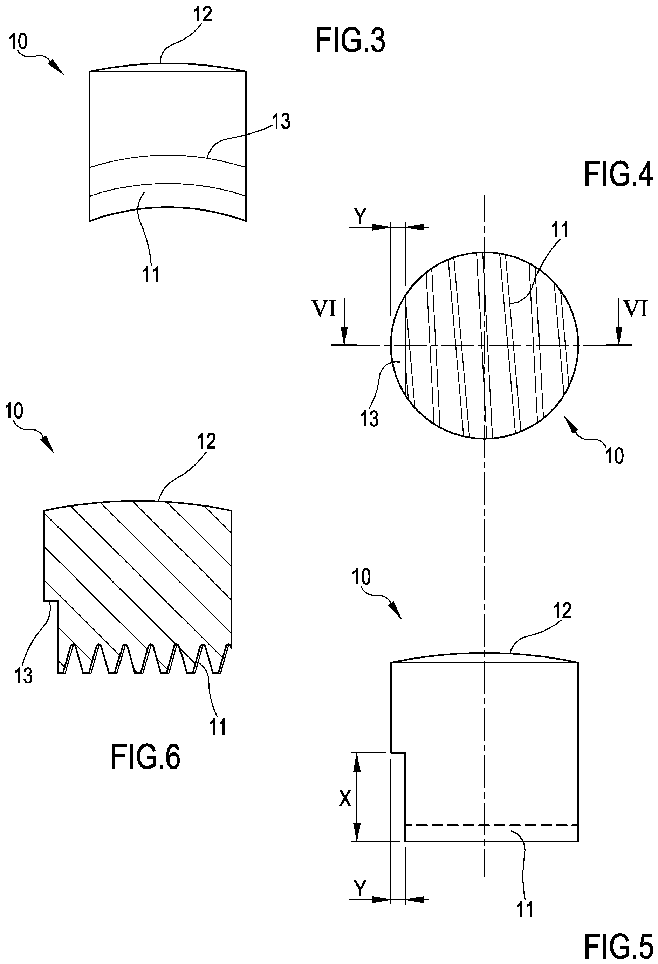

The pins 10 further have a step 13 in proximity of the respective radially internal end 11. The step 13 is configured for blocking, in collaboration with an abutment element 29 (which will be described in greater detail in the following), the radial sliding of the pins 10 internally of the radial seats 9. The step 13 of the pins 10 enables therefore limiting the radial movement thereof and prevents the pins 10 from exiting from the radial seats 9 in which they are housed. Further, the step 13, in collaboration with the abutment element 29, prevents rotation of the pins 10 internally of the respective radial seats 9. The step 13 has a height or width X, which can be substantially equal to half the height of the pin 10, and a depth Y defining the recess of the step 13 with respect to the substantially cylindrical body of the pin 10 (see figure 4 and figure 5). The step 13 may be obtained by milling. The plurality of pins 10 constitutes a jaw 14 of the quick coupling 1. The jaw 14 operates between a first unhooked position from the terminal 2, in which it does not constrain the terminal 2 to the quick coupling 1, and a second hooked position to the terminal 2 in which it constrains the terminal 2 to the quick coupling 1. In the first unhooked position, the pins 10 are housed internally of the respective radial seats 9 and do not project from the radial seats 9 towards the conduit 4 (see figure 1), while in the second hooked position the pins 10 project from the radial seats 9 and are locked on the terminal 2 so as to stably constrain it in engagement to the quick coupling 1 (see figure 2). In other terms, in the first unhooked position the pins 10 assume a radially retracted position, while in the second hooked position the pins 10 assume a radially advanced position able to constrain the terminal 2 to the quick coupling 1.

In the second hooked position, the radially internal ends 11 of the pins 10 engage externally to the terminal 2, as illustrated in figure 2.

The first portion 5 of the main body 3 further has a plurality of housing seats 15 which are through-seats. The housing seats 15 are defined at an axially more internal portion of the main body 3 with respect to the radial seats 9.

The quick coupling 1 further comprises an auxiliary body 16 having a substantially tubular conformation. The auxiliary body 16 substantially functions as an activating device of the quick coupling 1, as will be seen in greater detail in the following. The auxiliary body 16 is arranged externally of the main body 3 and is configured so as to slide axially with respect to the main body 3. The axial sliding of the auxiliary body 16 is enabled/disabled by hooking/unhooking devices, which will be described in greater detail in the following. The auxiliary body 16 comprises a thrust surface 17 defined at an end portion of the auxiliary body 16. The thrust surface 17 is configured for operating pushingly on the pins 10 in order to determine the radial translation internally of the radial seats 9. As illustrated in the accompanying figures, the thrust surface 17 may have a substantially truncoconical conformation developing about the main extension axis X-X.

The auxiliary body 16 comprises a plurality of housing portions 18, each of which substantially defines a recess at an internal surface of the auxiliary body 16. A first spring 19 is engaged between the auxiliary body 16 and the second portion 6 of the main body 3, and is configured for pushing the auxiliary body 16 towards the first end 7 of the main body 3. The first spring 19 is helical and operates on annular walls of the auxiliary body 16 and of the second portion 6 of the main body 3 facing each other. These walls extend transversally with respect to the main extension axis X-X.

The quick coupling 1 further comprises an obturator 20 and a cursor 21. The obturator 20 is engaged internally of the main body 3 and is configured so as to slide axially with respect to the main body 3. The obturator 20 is internally hollow and defines a portion of the conduit 4. A second spring 22 is arranged between the obturator 20 and the second portion 6 of the main body 3, which second spring 22 is in abutment on annular walls of the second portion 6 and of the obturator 20 facing each other. The annular walls extend transversally with respect to the main extension axis X-X. The second spring 22 is configured for pushing the obturator 20 towards the first end 7 of the main body 3. The second spring 22 is helical. The obturator 20 is provided with a first seal 23 arranged at an annular recess 24 and configured for determining the fluid seal between the obturator 20 and the second portion 6 of the main body 3 (see figures 1 and 2).

The cursor 21 is externally engaged to the obturator 20 and is configured for axially translating with respect to siad obturator 20. The axial translation of the cursor 21 is limited by a first elastic ring 25 and by an annular wall 26 of the obturator 20. The first elastic ring 25 and the annular wall 26 of the obturator 20 substantially constitute limit-stop means able to limit the axial sliding of the cursor 21. The annular wall 26 of the obturator 20 is transversal to the main extension axis X-X and defines an limit-stop abutment during the axial advancement of the cursor 21 with respect to the obturator 20. The cursor 21 has a saddle conformation having a top 21a that is substantially flat and an abutment portion 21b for said hooking/unhooking devices. The saddle conformation of the cursor 21 is for example visible from the sections of the quick coupling 1 represented in figures 1 and 2. The abutment portion 21b is retracted with respect to the top 21a and extends continuously with respect thereto. As illustrated in figures 1 and 2, the abutment portion 21b and the top 21a are connected to one another.

A third spring 27 is engaged between the cursor 21 and the second portion 6 of the main body 3, and is configured for pushing the cursor 21 towards the first end 7 of the main body 3. The third spring 27 is helical.

The obturator 20 further comprises a second seal 28 engaged at an end portion of the obturator 20 and configured for ensuring a fluid seal between the obturator 20 and the terminal 2 and preventing the fluid from leaking at the end portion of the obturator 20. The second seal 28 has a substantially cylindrical extension about the main extension axis X-X and is engaged at an internal surface of the obturator 20.

The quick coupling 1 further comprises an abutment element 29 engaged to an inside of the first portion 5 of the main body 3. The abutment element 29 has an annular extension and is arranged about the obturator 20. As illustrated in the accompanying figures, the abutment element 29 extends substantially between the obturator 20 and the first portion 5 of the main body 3. The abutment element 29 is axially blocked in proximity of the radial seats 9 by a second elastic ring 30 and by the first portion 5 of the main body 3. The abutment element 29 is configured for blocking the radial translation of the pins 10 internally of the radial seats 9. The abutment element 29 has a terminal end 29a having an annular extension projecting frontally with respect to the radial seat 9. The terminal end 29a is destined to enter into abutment with the step 13 of the pins 10 during the radial sliding of the pins 10 internally of the radial seats 9. The abutment between the step 13 of the pins 10 and the terminal end 29a of the abutment element 29 takes place in the second hooked position of the jaw 14 (see figure 2), i.e. when the pins 10 are in the radially advanced position, and prevents the further radial advancement of the pins 10. As illustrated in figure 3, the step 13 can have an arc of circumference extension that is substantially complementarily-profiled with respect to the annular extension of the terminal end 29a of the abutment element 29.

The quick coupling 1 further comprises a plurality of spheres 31 housed internally of the respective housing seats 15 defined in the first portion 5 of the main body 3. The spheres 31, the cursor 21, the housing seats 15 of the main body 3 and the housing portions 18 of the auxiliary body 16 define the hooking/unhooking devices. The spheres 31 can slide radially internally of the housing seats 15. In particular, the spheres 31 operate between a position in which they are partly housed internally of the housing portions 18 and are in contact with the top 21a of the cursor 21 (see figure 1) in such a way as to inhibit sliding of the auxiliary body 16 with respect to the main body 3 and a position in which they are not housed internally of the housing portions 18 and are in contact with the curved abutment portion 21b of the cursor 21 (see figure 2) in such a way as to enable sliding of the auxiliary body 16 with respect to the main body 3.

The sliding of the auxiliary body 16 with respect to the main body 3 takes place upon the thrust of the first spring 19 and causes the thrust surface 17 thereof to surmount the pins 10, determining the centripetal radial translation thereof internally of the radial seats 9. The configuration in which the auxiliary body 16 surmounts the pins 10 is illustrated in figure 2. In this configuration the jaw 14 is in the second hooked position to the terminal 2.

A locking method of the quick coupling 1 will be described in detail in the following. The quick coupling 1 configuration prior to the locking is illustrated in figure 1. In this configuration, the positioning of the spheres 31 between the top of the cursor 21 and the respective housing portions 18 retains the auxiliary body 16 in an axially retracted position.

To proceed to the locking of the quick coupling 1, the terminal 2 is inserted internally of the first end 7 of the main body 3 and the auxiliary body 16 is pushed in the direction of the terminal 2, i.e. towards the first end 7 of the main body 3. The insertion of the terminal 2 pushes the obturator 20 axially towards the second end 8 of the main body 3, overcoming the elastic force of the second spring 22 which tends to maintain the quick coupling 1 in the initial configuration illustrated in figure 1. The axial sliding of the obturator 20 towards the second end 8 of the main body 3 draws the cursor 21 in axial sliding. The cursor 21 operates between a first position in which it constrains the spheres 31 internally of the housing portions 18 and prevents axial sliding of the auxiliary body 16 (see figure 1) and a second position in which it does not constrain the spheres 31 in the housing portions 18 and enables the axial sliding of the auxiliary body 16 (see figure 2). There now follows a description of the passage of the cursor 21 from the first to the second position. The axial sliding of the cursor 21 causes the curved abutment portion 21b of the cursor 21 to position frontally of the housing seats 15, in particular in a radially internal position with respect to the housing seats 15. In this way, the spheres 31 translate radially in a centripetal direction towards the main extension axis X-X. The centripetal translation of the spheres 31 determines the disengagement of the spheres 31 from the housing portions 18. The auxiliary body, being no longer retained in position by the spheres 31, translates axially in the direction of the first end 7 of the main body 3 by effect of the thrust of the first spring 19 and the manual thrust exerted thereon by the operator 20. The auxiliary body 16 then assumes an axially advanced position. The axial translation of the auxiliary body 16 brings the thrust surface 17 to act on the convex ends 12 of the pins 10, causing the centripetal radial translation thereof internally of the radial seats 9. The radially internal ends 11 of the pins 10 are then brought into abutment on the terminal 2 (see figure 2) determining the solid engagement of the pins 10 to the terminal 2 and therefore of the terminal 2 to the quick coupling 1.

The present invention further relates to a method for realising a quick coupling 1 of the above-described type. The method includes realisation of a plurality of pins 10. The pins 10 are machined in such a way as to fashion a threaded or profiled surface at an end 11 of the pins 10. Material is also removed from the pins 10 in order to fashion a step 13, the function of which has been previously described. The method includes engaging a plurality of pins 10 at the radial seats 9 of the first portion 5 of the main body 3. The method further includes housing the spheres 31 internally of the respective housing seats 15 fashioned in the first portion 5 of the main body 3.

Thereafter an auxiliary body 16 is engaged to the outside of the main body 3. The auxiliary body 16 is engaged to the main body 3 so as to arrange the housing portions 18 at the position of the spheres 31, for at least partly housing the spheres 31 and thus constraining the axial sliding of the auxiliary body 16.

## Claims

1. A quick coupling (1) for profiled or threaded terminals (2), comprising:
- a substantially tubular main body (3) internally delimiting a passage conduit (4) for a fluid and extending along a main axis (X-X), the main body (3) comprising a first end (5) configured for being removably coupled to a terminal (2) and a second end (6) configured for being coupled to a circuit,
- a jaw (14) engaged to the main body (3), the jaw (14) operating between a first unhooked position from the terminal (2), in which it does not constrain the terminal (2) to the quick coupling (1), and a second hooked position to the terminal (2) in which it constrains the terminal (2) to the quick coupling (1), wherein said jaw (14) comprises at least a pin (10) housed in a radial seat (9) defined at the first end (5) of the main body (3), said at least a pin (10) being configured for radially sliding internally of said radial seat (9),
- at least an activating device (16, 17) operatively engaged with said at least a jaw (14) for determining passage of the jaw (14) between the first position and the second position, said at least an activating device (16, 17) comprising an auxiliary body (16) configured for operating on said at least a pin (10),
- hooking/unhooking devices (15, 18, 21, 31) configured for operating on the auxiliary body (16) so as to regulate the relative axial position between the auxiliary body (16) and the main body (3); wherein the hooking/unhooking devices (15, 18, 21, 31) comprise a plurality of spheres (31) configured for operating between a first configuration in which they block the relative axial movement between the auxiliary body (16) and the main body (3) and a second configuration in which they enable the relative axial movement between the auxiliary body (16) and the main body (3), the spheres (31) being housed internally of housing seats (15) fashioned in the main body (3) and being configured for radially sliding internally of said housing seats (15) in order to pass between said two configurations;
wherein said at least a pin (10) has a profiled or threaded radially internal end (11) that is configured for being coupled to the profiled or threaded terminal (2); wherein in the second position of the jaw (14) the profiled or threaded radially internal end (11) of the pin (10) is engaged to the terminal (2) so as to retain the terminal (2) in engagement to the quick coupling (1); wherein the profiling or threading of the radially internal end (11) of said at least a pin (10) is an integral part of the pin (10) and extends over a whole base of the pin.

2. The quick coupling according to claim 1, wherein the pin (10) has a substantially cylindrical conformation having a substantially constant diameter between the threaded or profiled radially internal end (11) and a radially external end (12) opposite the profiled or threaded radially internal end (11).

3. The quick coupling according to claim 2, wherein the threading or profiling does not project beyond the substantially cylindrical conformation of the pin (10).

4. The quick coupling according to any one of the preceding claims, wherein the threading or profiling is defined by a threaded or profiled surface located at the radially internal end (11) of said at least a pin (10).

5. The quick coupling according to any one of the preceding claims, wherein the jaw (14) comprises a plurality of pins (10) housed in respective radial seats (9) defined at the first end of the main body (3).

6. The quick coupling according to any one of the preceding claims, wherein the auxiliary body (16) is externally engaged to the main body (3) and has a thrust surface (17) configured for operating on said at least a pin (10), the auxiliary body (16) being configured for operating between an axially advanced position in which it constrains said at least a pin (10) in the second hooked position to the terminal (2) and an axially retracted position, in which it releases said at least a pin (10).

7. The quick coupling according to any one of the preceding claims, wherein said at least a pin (10) has a convex radially external end (12) opposite the profiled or threaded radially internal end (11).

8. The quick coupling according to claim 1, wherein the hooking/unhooking devices (15, 18, 21, 31) have a plurality of housing portions (18) defined on the auxiliary body (16), in the axially retracted position of the auxiliary body (16), each housing portion (18) being configured for at least partly housing a respective sphere (31) so as to prevent the axial sliding of the auxiliary body (16).

9. The quick coupling according to the preceding claim, wherein the hooking/unhooking devices (15, 18, 21, 31) comprise a cursor (21), the cursor (21) being operatively active on the spheres (31) and being configured for axially sliding between a first position in which it constrains the spheres (31) internally of the housing portions (18) and prevents axial sliding of the auxiliary body (16) and a second position in which it does not constrain the spheres (31) in the housing portions (18) and enables the axial sliding of the auxiliary body (16).

10. The quick coupling according to any one of the preceding claims, wherein said at least a pin (10) comprises a step (13) configured for blocking the radial sliding of the pin (10) internally of the respective radial seats (9).

11. The quick coupling according to the preceding claim, wherein the step of the pins (10) has an arc of circumference extension.

12. The quick coupling according to the preceding claim, further comprising an abutment element (29) provided with a terminal end (29a) projecting frontally with respect to the radial seat (9), said terminal end (29a) being configured so as to enter into abutment with the step (13) for determining the blocking of the radial sliding of said at least a pin (10).

## Patentansprüche

1. Schnellkupplung (1) für Profil- oder Gewindeanschlüsse (2), welche aufweist:
- einen im Wesentlichen rohrförmigen Hauptkörper (3), der im Inneren einer Durchgangsleitung (4) für ein Fluid begrenzt und sich entlang einer Hauptachse (X-X) erstreckt, wobei der Hauptkörper (3) ein erstes Ende (5), das zur lösbaren Kupplung mit einem Anschluss (2) konfiguriert ist, und ein zweites Ende (6), das zur Kupplung mit einer Leitung konfiguriert ist, aufweist,
- einen Backen (14) in Eingriff mit dem Hauptkörper (3), wobei der Backen (14) zwischen einer ersten, von dem Anschluss (2) enthakten Position, in der er den Anschluss (2) in der Schnellkupplung (1) nicht hält, und einer zweiten, an den Anschluss (2) gehakten Position, in der er den Anschluss (2) an der Schnellkupplung (1) hält, arbeitet,
wobei der Backen (14) zumindest einen Stift (10) aufweist, der in einem radialen Sitz (9) aufgenommen ist, der an dem ersten Ende (5) des Hauptkörpers (3) definiert ist, wobei der zumindest einen Stift (10) konfiguriert ist, um im Inneren des radialen Sitzes (9) radial zu gleiten,
- zumindest eine Aktivierungsvorrichtung (16, 17), die mit dem zumindest einen Backen (14) in betriebsmäßigem Eingriff steht, um die Passage des Backens (14) zwischen der ersten Position und der zweiten Position zu bestimmen, wobei die zumindest eine Aktivierungsvorrichtung (16, 17) einen Hilfskörper (16) aufweist, der konfiguriert ist, um auf den zumindest einen Stift (10) zu wirken,
- Verhak-/Enthakvorrichtungen (15, 18, 21, 31), die konfiguriert sind, um auf den Hilfskörper (16) zu wirken, um die relative axiale Position zwischen dem Hilfskörper (16) und dem Hauptkörper (3) zu regulieren; wobei die Verhak-/Enthakvorrichtungen (15, 18, 21, 31) eine Mehrzahl von Kugeln (31) aufweisen, die konfiguriert sind, um zwischen einer ersten Konfiguration, in der sie die relative axiale Bewegung zwischen dem Hilfskörper (16) und dem Hauptkörper (3) blockieren, und einer zweiten Konfiguration, in der sie die relative axiale Bewegung zwischen dem Hilfskörper (16) und dem Hauptkörper (3) erlauben, zu arbeiten, wobei die Kugeln (31) im Inneren von Aufnahmesitzen (15) aufgenommen sind, die in dem Hauptkörper (3) ausgebildet sind und zum radialen Gleiten im Inneren der Aufnahmesitze (15) konfiguriert sind, um zwischen den zwei Konfigurationen zu passieren;
wobei der zumindest eine Stift (10) ein radial inneres Profil- oder Gewindeende (11) aufweist, das zur Kupplung mit dem Profil- oder Gewindeanschluss (2) konfiguriert ist; wobei in der zweiten Position des Backens (14) das radial innere Profil- oder Gewindeende (11) des Stifts (10) mit dem Anschluss (2) in Eingriff tritt, um den Anschluss (2) in Eingriff mit der Schnellkupplung (1) zu halten; wobei das radial innere Profil- oder Gewindeende (11) des zumindest einen Stifts (10) ein integriertes Teil des Stifts (10) ist und sich über eine gesamte Basis des Stifts erstreckt.

2. Die Schnellkupplung nach Anspruch 1, wobei der Stift (10) eine im Wesentlichen zylindrische Ausbildung mit einem im Wesentlichen konstanten Durchmesser zwischen dem radial inneren Profil- oder Gewindeende (11) und einem dem radial inneren Profil- oder Gewindeende (11) entgegengesetzten radial äußeren Ende (12) aufweist.

3. Die Schnellkupplung nach Anspruch 2, wobei das Gewinde oder die Profiliierung nicht über die im Wesentlichen zylindrische Ausbildung des Stifts (10) hinaus vorsteht.

4. Die Schnellkupplung nach einem der vorhergehenden Ansprüche, wobei das Gewinde oder die Profilierung durch eine Gewinde- oder Profiloberfläche definiert ist, die an dem radial inneren Ende (11) des zumindest einen Stifts (10) angeordnet ist.

5. Die Schnellkupplung nach einem der vorhergehenden Ansprüche, wobei der Backen (14) eine Mehrzahl von Stiften (10) aufweist, die in jeweiligen radialen Sitzen (9) aufgenommen sind, die an dem ersten Ende des Hauptkörpers (3) definiert sind.

6. Die Schnellkupplung nach einem der vorhergehenden Ansprüche, wobei der Hilfskörper (16) außen mit dem Hauptkörper (3) in Eingriff steht und eine Druckfläche (17) aufweist, die zum Einwirken auf den zumindest einen Stift (10) konfiguriert ist, wobei der Hilfskörper (16) konfiguriert ist, um zwischen einer axial ausgefahrenen Position, in der er den zumindest einen Stift (10) in der zweiten an dem Anschluss (2) verhakten Position hält, und einer axial eingefahrenen Position, in der er den zumindest einen Stift (10) loslässt, zu arbeiten.

7. Die Schnellkupplung nach einem der vorhergehenden Ansprüche, wobei der zumindest eine Stift (10) ein dem radial inneren Profil- oder Gewindeende (11) entgegengesetztes konvexes radial äußeres Ende (12) aufweist.

8. Die Schnellkupplung nach Anspruch 1, wobei die Verhak-/Enthakvorrichtungen (15, 18, 21, 31) eine Mehrzahl von Aufnahmeabschnitten (18) aufweisen, die an dem Hilfskörper (16) definiert sind, wobei, in der axial eingefahrenen Position des Hilfskörpers (16), jeder Aufnahmeabschnitt (18) konfiguriert ist, um eine jeweilige Kugel (31) zumindest teilweise aufzunehmen, um das axiale Verschieben des Hilfskörpers (16) zu verhindern.

9. Die Schnellkupplung nach dem vorhergehenden Anspruch, wobei die Verhak-/Enthakvorrichtungen (15, 18, 21, 31) einen Läufer (21) aufweisen, wobei der Läufer (21) auf die Kugeln (31) wirkt und konfiguriert ist, um zwischen einer ersten Position, in der er die Kugeln (31) im Inneren der Aufnahmeabschnitte (18) hält und ein axiales Verschieben des Hilfskörpers (16) verhindert, und einer zweiten Position, in der er die Kugeln (31) nicht in den Aufnahmeabschnitten (18) hält und das axiale Gleiten des Hilfskörpers (16) erlaubt, axial gleitet.

10. Die Schnellkupplung nach einem der vorhergehenden Ansprüche, wobei der zumindest eine Stift (10) eine Stufe (13) aufweist, die konfiguriert ist, um das radiale Gleiten des Stifts (10) im Inneren der jeweiligen radialen Sitze (9) zu blockieren.

11. Die Schnellkupplung nach dem vorhergehenden Anspruch, wobei die Stufe der Stifte (9) einen sich am Umfang erstreckenden Bogen aufweist.

12. Die Schnellkupplung nach dem vorhergehenden Anspruch, die ferner ein Stützelement (29) aufweist, das mit einem Anschlussende (29a) versehen ist, das in Bezug auf den radialen Sitz (9) frontal vorsteht, wobei das Anschlussende (29a) konfiguriert ist, um in Anlage mit der Stufe (9) zu treten, um das Blockieren des radialen Gleitens des zumindest einen Stifts (10) zu bestimmen.

## Revendications

1. Raccordement rapide (1) pour bornes (2) profilées ou filetées, comprenant :
- un corps principal (3) sensiblement tubulaire délimitant au plan interne un conduit de passage (4) pour un liquide et s'étendant le long d'un axe principal (X-X), le corps principal (3) comprenant une première extrémité (5) configurée pour être raccordée de manière amovible à une borne (2) et une seconde extrémité (6) configurée pour être raccordée à un circuit,
- une mâchoire (14) engagée au corps principal (3), la mâchoire (14) fonctionnant entre une première position non accrochée depuis la borne (2), dans laquelle elle ne contraint pas la borne (2) au raccordement rapide (1), et une seconde position accrochée à la borne (2) dans laquelle elle contraint la borne (2) au raccordement rapide (1),
où ladite mâchoire (14) comprend au moins une broche (10) logée dans une assise radiale (9) définie à la première extrémité (5) du corps principal (3), ladite au moins une broche (10) étant configurée pour coulisser radialement au plan interne de ladite assise radiale (9),
- au moins un dispositif d'activation (16, 17) fonctionnellement engagé avec ladite au moins une mâchoire (14) pour déterminer le passage de la mâchoire (14) entre la première position et la seconde position, ledit au moins un dispositif d'activation (16, 17) comprenant un corps auxiliaire (16) configuré pour fonctionner sur ladite au moins une broche (10),
- des dispositifs d'accrochage/décrochage (15, 18, 21, 31) configurés pour fonctionner sur le corps auxiliaire (16) afin de réguler la position axiale relative entre le corps auxiliaire (16) et le corps principal (3) ; où les dispositifs d'accrochage/décrochage (15, 18, 21, 31) comprennent une pluralité de sphères (31) configurées pour fonctionner entre une première configuration dans laquelle elles bloquent le mouvement axial relatif entre le corps auxiliaire (16) et le corps principal (3) et une seconde configuration dans laquelle elles permettent le mouvement axial relatif entre le corps auxiliaire (16) et le corps principal (3), les sphères (31) étant logées au plan interne des sièges de logement (15) façonnés dans le corps principal (3) et étant configurées pour coulisser radialement au plan interne desdits sièges de logement (15) afin de passer entre lesdites deux configurations ;
où ladite au moins une broche (10) présente une extrémité profilée ou filetée radialement interne (11) qui est configurée pour être raccordée à la borne (2) profilée ou filetée ; où dans la seconde position de la mâchoire (14) l'extrémité profilée ou filetée radialement interne (11) de la broche (10) est engagée au niveau de la borne (2) afin de retenir la borne (2) en engagement avec le raccordement rapide (1) ;
où le profilage ou le filetage de l'extrémité radialement interne (11) de ladite au moins une broche (10) est une partie solidaire de la broche (10) et qui s'étend sur une base complète de la broche.

2. Raccordement rapide selon la revendication 1, la broche (10) ayant une conformation sensiblement cylindrique ayant un diamètre sensiblement constant entre l'extrémité profilée ou filetée radialement interne (11) et une extrémité radialement externe (12) opposée à l'extrémité profilée ou filetée radialement interne (11).

3. Raccordement rapide selon la revendication 2, le filetage ou le profilage ne se projetant pas au-delà de la conformation sensiblement cylindrique de la broche (10).

4. Raccordement rapide selon l'une quelconque des revendications précédentes, le filetage ou le profilage étant défini par une surface filetée ou profilée localisée au niveau de l'extrémité radialement interne (11) de ladite au moins une broche (10).

5. Raccordement rapide selon l'une quelconque des revendications précédentes, la mâchoire (14) comprenant une pluralité de broches (10) logées dans des assises radiales (9) respectives définies à la première extrémité du corps principal (3).

6. Raccordement rapide selon l'une quelconque des revendications précédentes, le corps auxiliaire (16) étant engagé au plan externe au corps principal (3) et présentant une surface de poussée (17) configurée pour fonctionner sur ladite au moins une broche (10), le corps auxiliaire (16) étant configuré pour fonctionner entre une position axialement avancée dans laquelle il contraint ladite au moins une broche (10) dans la seconde position accrochée à la borne (2) et une position axialement rétractée, dans laquelle il libère ladite au moins une broche (10).

7. Raccordement rapide selon l'une quelconque des revendications précédentes, ladite au moins une broche (10) ayant une extrémité convexe radialement externe (12) opposée à l'extrémité profilée ou filetée radialement interne (11).

8. Raccordement rapide selon la revendication 1, les dispositifs d'accrochage/décrochage (15, 18, 21, 31) ayant une pluralité de parties de logement (18) définies sur le corps auxiliaire (16), dans la position axialement rétractée du corps auxiliaire (16), chaque partie de logement (18) étant configurée pour loger au moins partiellement une sphère (31) respective afin d'empêcher le coulissement axial du corps auxiliaire (16).

9. Raccordement rapide selon la revendication précédente, les dispositifs d'accrochage/décrochage (15, 18, 21, 31) comprenant un curseur (21), le curseur (21) étant fonctionnellement actif sur les sphères (31) et étant configuré pour coulisser axialement entre une première position dans laquelle il contraint les sphères (31) au plan interne des parties de logement (18) et empêche le coulissement axial du corps auxiliaire (16) et une seconde position dans laquelle il ne contraint pas les sphères (31) dans les parties de logement (18) et permet le coulissement axial du corps auxiliaire (16).

10. Raccordement rapide selon l'une quelconque des revendications précédentes, ladite au moins une broche (10) comprenant un cran (13) configuré pour bloquer le coulissement radial de la broche (10) au plan interne des assises radiales (9) respectives.

11. Raccordement rapide selon la revendication précédente, dans lequel le cran des broches (10) présente un arc d'extension dans la circonférence.

12. Raccordement rapide selon la revendication précédente, comprenant en outre un élément de butée (29) disposé avec une extrémité terminale (29a) se projetant au plan frontal par rapport à l'assise radiale (9), ladite extrémité terminale (29a) étant configurée afin d'entrer en butée avec le cran (13) pour déterminer le blocage du coulissement radial de ladite au moins une broche (10).
